# EUROPÄISCHE PATENTSCHRIFT

(11) **EP 2 639 940 B1**
(45) Veröffentlichungstag und Bekanntmachung des Hinweises auf die Patenterteilung: **24.09.2014**
(21) Anmeldenummer: 12159623.3
(22) Anmeldetag: 15.03.2012
(51) Int. Cl.: H02K 5/18, H02K 11/00

(54) **Elektromotor**
Electric motor
Moteur électrique

(43) Veröffentlichungstag der Anmeldung: 18.09.2013
(73) Patentinhaber: Grundfos Holding A/S, 8850 Bjerringbro (DK)
(72) Erfinder: Madsen Obel, Palle, 8800 Viborg (DK); Østergaard, Lars, 8920 Randers NV (DK)
(74) Vertreter: Patentanwälte Vollmann & Hemmer

(56) Entgegenhaltungen:
- DE-A1-102010 017 222
- JP-A- 11 234 954

## Beschreibung

Die Erfindung betrifft einen Elektromotor sowie ein Pumpenaggregat mit einem solchen Elektromotor als Antriebsmotor.

Elektromotoren weisen in der Regel ein Statorgehäuse und in der Regel einen Klemmenkasten bzw. ein Elektronikgehäuse auf, in welchem elektrische und insbesondere elektronische Bauteile zur Steuerung des Elektromotors angeordnet sind. Dabei ist es bekannt, dass ein solches Elektronikgehäuse umfangsseitig bzw. radialseitig des Statorgehäuses angeordnet ist. Dabei weist das Elektronikgehäuse in der Regel eine kürzere oder gleiche Länge, wie das Statorgehäuse auf. An einem ersten Axialende des Statorgehäuses ist in der Regel ein Lüfter angeordnet, welcher zur Kühlung des Elektromotors dient, um die im Statorgehäuse und Elektronikgehäuse anfallende Abwärme abzuführen. Am Elektronikgehäuse und/oder an dem Statorgehäuse können Kühlrippen ausgebildet sein, welche von einem Luftstrom, welcher von dem Lüfter erzeugt wird, kühlend überströmt werden.

Insbesondere wenn ein Frequenzumrichter in dem Elektronikgehäuse angeordnet ist, stellt sich das Problem, dass vor allem im Elektronikgehäuse eine große Menge abzuführender Abwärme anföllt.

JP 11-234954 A offenbart einen elektrischen Motor mit einem außerhalb des Statorgehäuses angeordneten Elektronikgehäuse, wobei das Elektronikgehäuse sich axial über das Ende des Statorgehäuses hinaus erstreckt, sodass es in radialer Richtung von einem am Axialende des Statorgehäuses angeordneten Lüfter angeströmt werden kann. Im Inneren des Elektronikgehäuses sind verschiedene elektronische Bauteile angeordnet. Außerhalb des Gehäuses sind darüber hinaus Kühlrippen an der dem Lüfter zugewandten Seite angeordnet. Auch bei dieser Lösung besteht das Bedürfnis, die Kühlung der elektronischen Bauteile im Inneren des Elektronikgehäuses weiter zu verbessern.

Im Hinblick auf diese Problematik ist es Aufgabe der Erfindung, einen Elektromotor dahingehend zu verbessern, dass in einem Elektronikgehäuse angeordnete Bauteile besser gekühlt werden können. Diese Aufgabe wird durch einen Elektromotor mit den in Anspruch 1 angegebenen Merkmalen sowie durch ein Pumpenaggregat gemäß Anspruch 14 gelöst. Bevorzugte Ausführungsformen ergeben sich aus den Unteransprüchen, der nachfolgenden Beschreibung sowie den beigefügten Figuren.

Der erfindungsgemäße Elektromotor weist in bekannter Weise ein Statorgehäuse und ein Elektronikgehäuse auf. Dabei ist das Elektronikgehäuse an der Außenseite des Statorgehäuses angebracht und beinhaltet elektrische und elektronische Bauteile zum Anschluss und zur Steuerung des Elektromotors. Erfindungsgemäß ist ein erster Abschnitt des Elektronikgehäuses radialseitig des Statorgehäuses angeordnet, d. h. der erste Abschnitt des Elektronikgehäuses liegt radialseitig bzw. an einer Umfangsseite des Statorgehäuses bezogen auf die Drehachse des Elektromotors. An einem Axialende des Statorgehäuses ist darüber hinaus in bekannter Weise ein Lüfter angeordnet. An einem ersten Axialende bzw. einer ersten Axialseite des Statorgehäuses ragt bevorzugt die Rotorwelle aus dem Statorgehäuse heraus und der Lüfter ist an einer entgegengesetzten zweiten Axialseite des Statorgehäuses angeordnet.

Erfindungsgemäß weist das Elektronikgehäuse neben diesem ersten Abschnitt zumindest einen zweiten Abschnitt auf, welcher von einem Abschnitt des Elektronikgehäuses gebildet wird, der sich in axialer Richtung über das Axialende, d. h. die zweite Axialseite des Statorgehäuses, an welcher der Lüfter gelegen ist, hinauserstreckt. D. h. das Elektronikgehäuse ist in axialer Richtung zumindest an diesem Axialende länger ausgebildet, als das Statorgehäuse. Der zweite Abschnitt, welcher über das Axialende des Statorgehäuses hinausragt, liegt somit radialseitig des Lüfters, welcher an diesem Axialende angeordnet ist. In diesem zweiten Abschnitt ist in im Inneren zumindest ein erstes wärmeerzeugendes elektronisches Bauteil angeordnet. Die Anordnung des zweiten Abschnittes radialseitig des Lüfters und die Anordnung des ersten wärmeerzeugenden Bauteils in diesem zweiten Abschnitt hat den Vorteil, dass dieser Bereich von dem Lüfter besonders gut gekühlt werden kann, da der von dem Lüfter erzeugte Kühlluftstrom direkt in radialer Richtung auf diesen zweiten Abschnitt des Elektronikgehäuses gerichtet ist. Insofern wird eine verbesserte Kühlung der elektronischen Bauteile im Inneren des Elektronikgehäuses erreicht, wenn diese in dem zweiten Abschnitt radialseitig des Lüfters angeordnet sind. Vorzugsweise ist das zumindest eine wärmeerzeugende elektronische Bauteil in diesem zweiten Abschnitt direkt an einer Gehäusewandung, bevorzugt direkt an der Innenseite einer dem Lüfter zugewandten Gehäusewandung des Elektronikgehäuses wärmeleitend angeordnet.

Vorzugsweise sind der Lüfter und der zweite Abschnitt des Elektronikgehäuses so ausgebildet und relativ zueinander angeordnet, dass der genannte zweite Abschnitt des Elektronikgehäuses an seiner Außenseite, d. h. insbesondere der dem Lüfter zugewandten Außenseite in tangentialer Richtung durch einen von dem Lüfter erzeugten Kühlluftstrom überströmt wird. D. h. der aus dem Lüfter radial austretende Kühlluftstrom wird in diesem Bereich in tangentialer Richtung bzw. in Umfangsrichtung umgelenkt, sodass er in dieser Richtung die Außenseite des zweiten Abschnittes des Elektronikgehäuses überströmt. So wird die Kühlung dieses Bereiches noch weiter verbessert. Wenn der Lüfter nach außen von einer Kappe bzw. Abdeckung umgeben ist, kann darüber hinaus in diesem Bereich ein umfänglicher Luftstrom erzeugt werden, welcher unter dem zweiten Abschnitt des Elektronikgehäuses entlangströmt und diesen besonders gut kühlt. Besonders bevorzugt bewegt sich dieser Luftstrom schraubenförmig ausgehend von dem freien Axialende des Lüfters auf das erste Axialende des Statorgehäuses zu. Die entsprechende Umlenkung des Luftstromes wird durch die Gestaltung der Außenseite des zweiten Abschnittes des Elektronikgehäuses und/oder gegebenenfalls einer Kappe, welche den Lüfter umgibt, erreicht.

Gemäß einer besonderen Ausführungsform der Erfindung überströmt nur ein erster Teilluftstrom des von dem Lüfter erzeugten Kühlluftstroms eine Außenseite des zweiten Abschnittes des Elektronikgehäuses, während ein zweiter Teilluftstrom eine Außenseite des ersten Abschnittes des Elektronikgehäuses überströmt. Dies kann durch entsprechende Formgebung der Außenseite des Elektronikgehäuses und Anordnung und Gestaltung einer den Lüfter umgebenden Kappe erreicht werden. Durch diese Elemente kann eine Teilung des Kühlluftstromes, welcher von dem Lüfter erzeugt wird, in diesen ersten und den zweiten Teilluftstrom bewirkt werden. Auf diese Weise werden beide Bereiche, d. h. der erste Abschnitt und der zweite Abschnitt des Elektronikgehäuses optimal gekühlt.

Gemäß einer weiteren bevorzugten Ausführungsform der Erfindung ist an dem zweiten Abschnitt des Elektronikgehäuses, welcher radialseitig des Lüfters angeordnet ist, an der Außenseite eines dem Lüfter zugewandten ersten Wandungsabschnittes eine zu dem Lüfter hin gerichtete Berippung ausgebildet. Diese Berippung kann in Form länglicher Rippen oder beispielsweise auch in Form von Stiften oder anderweitig geformter Kühlrippen oder Kühlelemente ausgebildet sein. Besonders bevorzugt ist die Berippung so geformt, dass im Bereich dieses ersten Wandungsabschnittes eine Umlenkung des radial aus dem Lüfter auf den Wandungsabschnitt auftreffenden Luftstroms in tangentialer bzw. umfänglicher Richtung erfolgt, sodass der erste Wandungsabschnitt, welcher eine Außenseite des zweiten Abschnittes des Elektronikgehäuses bildet, in der oben beschrieben Weise in tangentialer Richtung überströmt wird.

An dem zweiten Abschnitt des Elektronikgehäuses, welcher radialseitig des Lüfters angeordnet ist, sind weiter bevorzugt an der Außenseite eines dem Lüfter zugewandten ersten Wandungsabschnittes Kühlrippen ausgebildet, welche sich bezogen auf die Drehachse des Elektromotors in Umfangsrichtung bzw. tangentialer Richtung erstrecken. Diese Kühlrippen bewirken die beschriebene Umlenkung des Luftstromes, sodass die Außenseite dieses Wandungsabschnittes und damit eine Außenseite des zweiten Abschnittes des Elektronikgehäuses in diesem Bereich in tangentialer Richtung bzw. in Umfangsrichtung von einem Kühlluftstrom überströmt wird. Besonders bevorzugt wird in diesem Bereich so ein rotierender umfänglicher Luftstrom im Umfangsbereich des Lüfters erzeugt, welcher diesen ersten Wandungsabschnitt, gegebenenfalls schraubenförmig mehrfach überströmt und so zu einer verbesserten Kühlung beiträgt.

Der zweite Wandungsabschnitt bildet weiter bevorzugt eine axiale Verlängerung des ersten Wandungsabschnittes. Der erste und der zweite Wandungsabschnitt bilden bevorzugt gemeinsam eine Unterseite des Elektronikgehäuses, welche dem Statorgehäuse und dem Lüfter zugewandt ist. Der erste Wandungsabschnitt und der zweite Wandungsabschnitt sind dabei bevorzugt einteilig bzw. einstückig geformt.

Weiter bevorzugt weist der erste Abschnitt des Elektronikgehäuses an der Außenseite eines der Umfangsfläche des Statorgehäuses zugewandten zweiten Wandungsabschnittes Kühlrippen auf, welche sich parallel zu der Drehachse des Elektromotors erstrecken. D. h. diese Kühlrippen sind vorzugsweise in axialer Richtung ausgerichtet, in welcher ein Kühlluftstrom entlang dem zweiten Wandungsabschnitt geführt wird. Dies kann entweder wie oben beschrieben ein Teilluftstrom sein oder aber auch zumindest ein Teil des Luftstromes, welcher zuvor den ersten Abschnitt des Elektronikgehäuses bzw. dessen ersten Wandungsabschnitt in tangentialer bzw. umfänglicher Richtung überströmt hat. Im Übergang des ersten zu dem zweiten Wandungsabschnitt kann es daher zu einer Umlenkung des Kühlluftstromes in die axiale Richtung kommen. Im Inneren des zweiten Abschnittes des Elektronikgehäuses ist das zumindest eine erste wärmeerzeugende Bauteil zweckmäßigerweise an einer Innenseite des dem Lüfter zuwandten Wandungsabschnittes angeordnet. Besonders bevorzugt ist eine direkte wärmeleitende Verbindung zwischen dem Bauteil und der Innenseite des Wadnungsabschnittes geschaffen, gegebenenfalls unter Verwendung eines wärmeleitenden Mediums, um einen optimalen Wärmeübergang zu schaffen.

Das zumindest eine wärmeerzeugende elektronische Bauteil ist dasjenige Bauteil im Inneren des Elektronikgehäuses, welches die meiste Wärme erzeugt. Es ist vorteilhaft, dieses Bauteil in dem zweiten Abschnitt direkt radialseitig des Lüfter zu platzieren, da dies bei dieser Anordnung der Bereich des Elektronikgehäuses ist, welcher durch die direkte Anströmung des Lüfters am besten gekühlt wird.

Bei dem zumindest einen ersten wärmeerzeugenden elektronischen Bauteil handelt es sich weiter bevorzugt um Teile eines Frequenzumrichters, insbesondere um einen Gleich- und/oder Wechselrichter eines Frequenzumrichters. Diese Bauteile enthalten Leistungsschalter und erzeugen in der Regel, gerade bei größerer Leistung des Elektromotors eine erhebliche Abwärme.

Weiter bevorzugt ist in dem ersten Abschnitt des Elektronikgehäuses zumindest ein zweites wärmeerzeugendes elektronisches Bauteil an einer Innenseite des zweiten, dem Statorgehäuse zugewandten Wandungsabschnittes angeordnet. Auch in diesem Bereich wird noch eine besonders starke Kühlwirkung durch einen axial gerichteten Luftstrom entlang dem zweiten, dem Statorgehäuse zuwandten Wandungsabschnitt erreicht. Insofern können auch in diesem Bereich optimal abwärmeerzeugende elektronische Bauteile im Inneren des Elektronikgehäuses angeordnet werden und gekühlt werden. Das zweite wärmeerzeugende elektronische Bauteil ist dabei bevorzugt an der Innenseite des dem Statorgehäuse zugewandten Wandungsabschnittes in wärmeleitender Verbindung angeordnet. Auch hier kann gegebenenfalls ein wärmeleitendes Medium zwischen dem elektronischen Bauteil und der Innenseite des Wandungsabschnittes angeordnet oder angebracht werden, um den Wärmeübergang zu verbessern.

Gemäß einer weiteren bevorzugten Ausführungsform der Erfindung kann in dem zweiten Abschnitt des Elektronikgehäuses, d. h. demjenigen Abschnitt des Elektronikgehäuses, welcher axialseitig das Statorgehäuse überragt, eine Tasche ausgeformt sein, in deren Inneren ein zweites wärmeerzeugendes elektronisches Bauteil angeordnet ist und welche derart angeordnet ist, dass die Tasche an ihrer Außenseite von einem tangential gerichteten Kühlluftstrom angeströmt wird. Die Tasche kragt dabei bevorzugt nach außen über die übrige Außenkontur des Elektronikgehäuses aus, sodass sie eine zusätzliche Außenoberfläche bildet, welche von Kühlluft angeströmt werden kann. In der Tasche ist vorzugsweise eine Spule eines Frequenzumrichters angeordnet. Dabei ist die Tasche in ihrer Form vorzugsweise an die Form des elektronischen Bauteils, insbesondere der Spule so angepasst, dass das elektronische Bauteil an der Innenseite der Tasche möglichst großflächig an der Wandung der Tasche anliegt, sodass in diesem Bereich ein optimaler Wärmeübergang erreicht wird. Die Tasche ist an dem zweiten Abschnitt so angeordnet, dass der tangential gerichtete Kühlluftstrom, welcher eine Außenseite bzw. einen ersten Wandungsabschnitt des zweiten Abschnittes in tangentialer Richtung überströmt, direkt die Außenseite bzw. eine Außenseite einer Wandung der Tasche an- oder überströmt. So wird dieser Bereich auch direkt von dem Kühlluftstrom, welcher aus dem Lüfter austritt, angeströmt und optimal gekühlt.

Zweckmäßigerweise ist zumindest der erste, dem Lüfter zugewandte Wandungsabschnitt und/oder der zweite dem Statorgehäuse zugewandte Wandungsabschnitt des Elektronikgehäuses aus Metall gefertigt. Beide Teile können beispielsweise einstückig als Gussbauteile, beispielsweise aus Aluminium gefertigt sein. Die zuvor beschrieben Tasche ist vorzugsweise einstückig mit dem ersten, dem Lüfter zugewandten Wandungsabschnitt des Elektronikgehäuses ausgebildet, bevorzugt ebenfalls aus Metall gegossen. Die Ausbildung der zu kühlenden Wandungsabschnitte des Elektronikgehäuses aus Metall hat den Vorteil, dass in diesen Bereichen eine große Wärmeleitfähigkeit des Elektronikgehäuses bzw. der Wandung des Elektronikgehäuses gegeben ist. Darüber hinaus lässt sich im Metallguss, beispielsweise im Druckguss, die komplexe Formgebung mit der Ausgestaltung der oben beschrieben Kühlrippen günstig erzeugen.

Der erste, dem Lüfter zugewandte Wandungsabschnitt und der zweite dem Statorgehäuse zugewandte Abschnitt sind bevorzugt einstückig gefertigt. Auch die zuvor beschriebene Tasche ist bevorzugt einstückig mit diesen Wandungsabschnitten gefertigt. Besonders bevorzugt ist das Elektronikgehäuse zweiteilig ausgebildet mit einem Unterteil und einem Deckel, wobei der erste und der zweite Wandungsabschnitt Teil des Unterteils sind und das gesamte Unterteil einstückig ausgebildet ist, insbesondere als Gussbauteil aus Metall.

Gemäß einer weiteren bevorzugten Ausführungsform kann im Inneren des Elektronikgehäuses zwischen zwei Bereichen des Innenraumes des Elektronikgehäuses eine elektromagnetische Abschirmung angeordnet sein. Diese kann in Form einer Trennwand ausgebildet sein. Eine solche Trennwand kann einstückig mit den weiteren Wandungsabschnitten, insbesondere einem gesamten Unterteil des Elektronikgehäuses aus Metall gegossen sein. Insbesondere ist die Abschirmung bevorzugt einstückig mit einem zweiten Wandungsabschnitt, welcher radialseitig des Statorgehäuses gelegen ist, gegossen. Die Wandung dient dazu, die Bauteile, welche starke elektromagnetische Störungen verursachen, gegenüber den anderen elektronischen Bauteilen im Inneren des Elektronikgehäuses abzuschirmen. Ein solches Bauteil ist beispielsweise eine Entstörspule (Common mode choke) eines Frequenzumrichters, welche bevorzugt in einem elektromagnetisch abgeschirmten Bereich des Elektronikgehäuses angeordnet ist.

Weiter bevorzugt sind mechanische und/oder elektrische Verbindungselemente zwischen dem Statorgehäuse und dem Elektronikgehäuse derart angeordnet, dass sie seitlich eines Kühlluftstromes zwischen Stator und Elektronikgehäuse gelegen sind. Das Elektronikgehäuse ist vorzugsweise radial beabstandet von der Außenwandung des Statorgehäuses angeordnet, sodass ein Freiraum zwischen Stator und Elektronikgehäuse verbleibt, durch welchen ein Kühlluftstrom strömt. Dieser Freiraum wird auf der Seite des Elektronikgehäuses von dem oben beschrieben zweiten Wandungsabschnitt des Elektronikgehäuses begrenzt. Bevorzugt sind an diesem Wandungsabschnitt sich in axialer Richtung, d. h. sich parallel zur Drehachse des Elektromotors erstreckende Kühlrippen ausgebildet. An der gegenüberliegenden Außenseite des Statorgehäuses können ebenfalls in axialer Richtung gerichtete Kühlrippen ausgebildet sein. Die genannten mechanischen Verbindungselemente, welche das Elektronikgehäuse an dem Statorgehäuse fixieren, sind dabei bevorzug seitlich des Bereiches, in dem die Kühlrippen zur Führung des axial gerichteten Kühlluftstromes angeordnet sind, platziert, sodass diese Verbindungselemente, beispielsweise Bolzen oder Schrauben nicht im Kühlluftstrom zwischen Elektronikgehäuse und Statorgehäuse gelegen sind und diesen Kühlluftstrom somit nicht stören.

Alternativ oder zusätzlich ist bevorzugt auch ein elektrisches Verbindungselement zwischen dem Elektronikgehäuse und dem Statorgehäuse so angeordnet, dass es außerhalb des beschrieben Kühlluftstromes oder an einer Seite des Freiraumes zwischen Elektronikgehäuse und Statorgehäuse, durch welchen der axial gerichtete Kühlluftstrom strömt, belegen ist. Dieses Verbindungselement kann beispielsweise ein Kabelkanal sein, durch welchen elektrische Verbindungsleitungen zwischen Stator und elektronischen Bauteilen im Inneren des Elektronikgehäuses geführt ist. Ein solcher Kabelkanal erstreckt sich vorzugsweise in axialer Richtung und ist seitlich bzw. an einer Seite einer Kühlrippenanordnung gelegen, durch welche der beschriebene axial gerichtete Kühlluftstrom zwischen Statorghäuse und Elektronikgehäuses geführt wird. So begrenzt der Kabelkanal den Kühlluftstrom seitlich und kann ebenfalls noch die Funktion einer Kühlrippe übernehmen.

Der vorangehend beschriebene Elektromotor findet bevorzugt als Antriebsmotor für ein Pumpenaggregat Verwendung. Insofern ist auch ein Pumpenaggregat mit einem Elektromotor gemäß der vorangehenden Beschreibung als Antriebsmotor Gegenstand dieser Erfindung.

Nachfolgend wir die Erfindung beispielhaft anhand der beigefügten Figuren beschrieben:

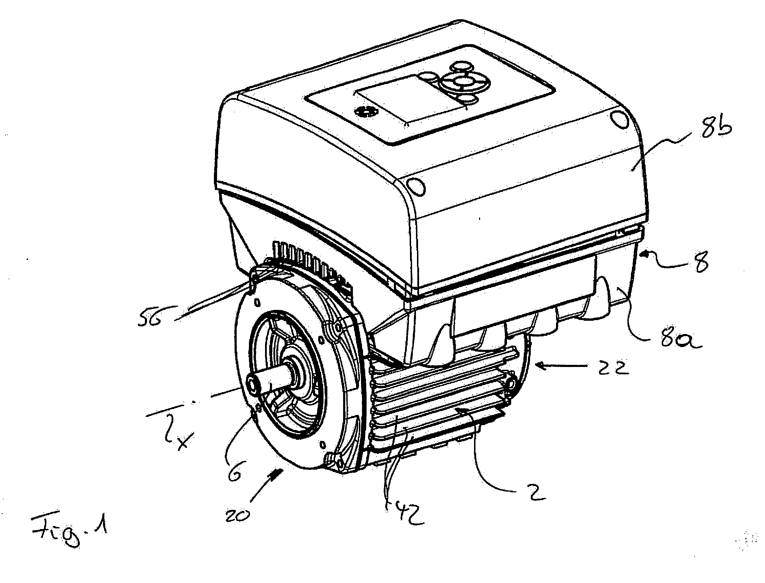

- Fig. 1: eine perspektivische Gesamtansicht eines erfindungsgemäßen Elektromotors,

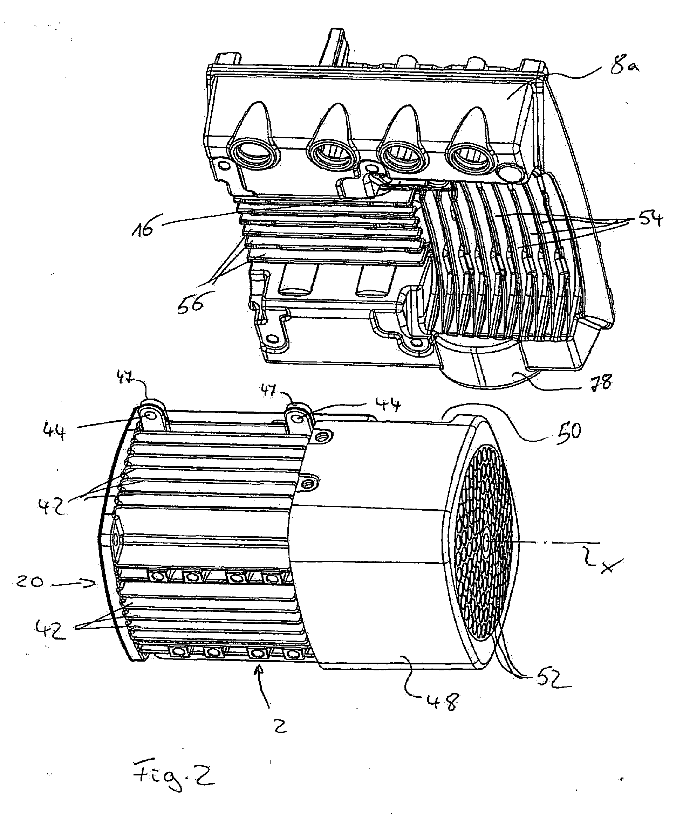

- Fig. 2: eine Ansicht des Elektromotors gemäß Fig. 1 mit vom Statorgehäuse getrennten Elektronikgehäuse,

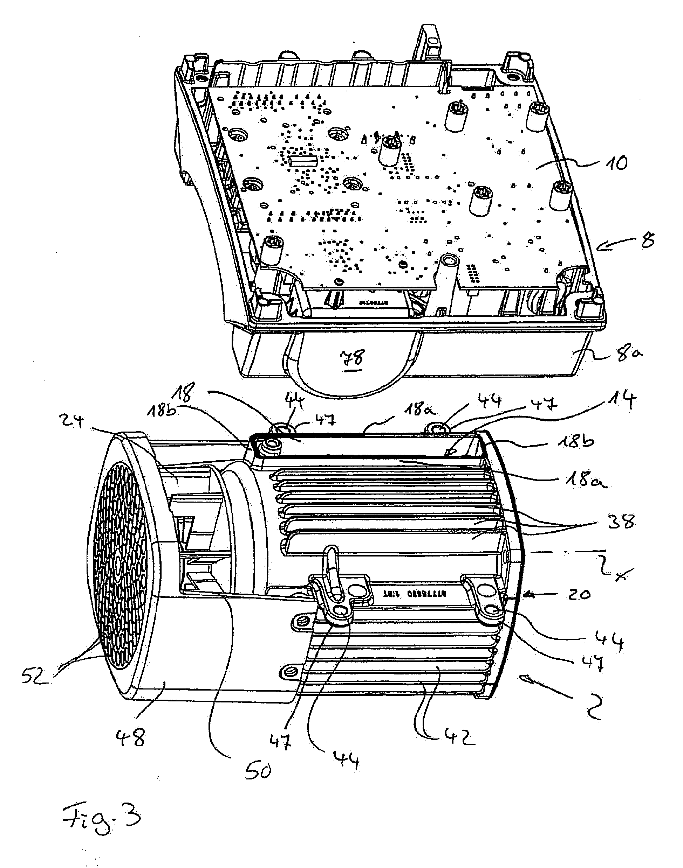

- Fig. 3: eine perspektivische Ansicht der Anordnung gemäß Fig. 2 von der Oberseite des Elektronikgehäuses her gesehen,
- Fig. 4.: eine perspektivische Ansicht des Statorgehäuses mit angebrachtem Unterteil eines Elektronikgehäuses,
- Fig. 5: eine perspektivische Ansicht des Statorgehäuses mit abgenommenem Deckel eines Kabelkanals,
- Fig. 6: das Statorgehäuse gemäß Fig. 5 mit eingesetztem Stator,
- Fig. 7: das Statorgehäuse gemäß Fig. 6 mit auf dem Kabelkanal aufgesetztem Deckel,
- Fig. 8: das Statorgehäuse gemäß Fig. 7 mit noch nicht aufgesetztem Unterteil des Elektronikgehäuses,
- Fig. 9: eine Ansicht von unten des Statorgehäuses mit aufgesetztem Elektronikgehäuse,
- Fig. 10: eine Draufsicht auf die Unterseite des Elektronikgehäuses bei abgenommenem Statorgehäuse,
- Fig. 11: eine Draufsicht auf das Unterteil des Elektronikgehäuses von dessen Innenseite her und
- Fig. 12: ein Blockdiagramm der wesentlichen elektronischen Bauteile in dem Elektronikgehäuse.

Der erfindungsgemäße Elektromotor, welcher in den Figuren gezeigt ist, weist ein Statorgehäuse 2 auf, in welchem ein Stator 4 mit einem dessen Inneren drehbaren Rotor mit einer Rotorwelle 6 angeordnet ist. Die Rotorwelle 6 steht in Richtung der Drehachse X aus dem Statorgehäuse 2 zum Anschluss an externe Komponenten, beispielsweise ein Pumpenaggregat vor. Radialseitig bezogen auf die Drehachse X ist am Außenumfang des Statorgehäuses 2 ein Elektronikgehäuse 8 angeordnet. Das Elektronikgehäuse 8 ist aus zwei Teilen, einem Unterteil 8a und einem Deckel 8b gebildet. Das Unterteil 8a ist mit seiner Unterseite an die Umfangsseite des Statorgehäuses 2 angesetzt. Die dem Statorgehäuse 2 abgewandte Oberseite des Unterteils 8a ist durch den Deckel 8b verschlossen. Das Statorgehäuse 2 und das Unterteil 8a des Elektronikgehäuses 8 und vorzugsweise auch der Deckel 8b des Elektronikgehäuses sind bevorzugt aus Metall, beispielsweise Aluminiumdruckguss gefertigt.

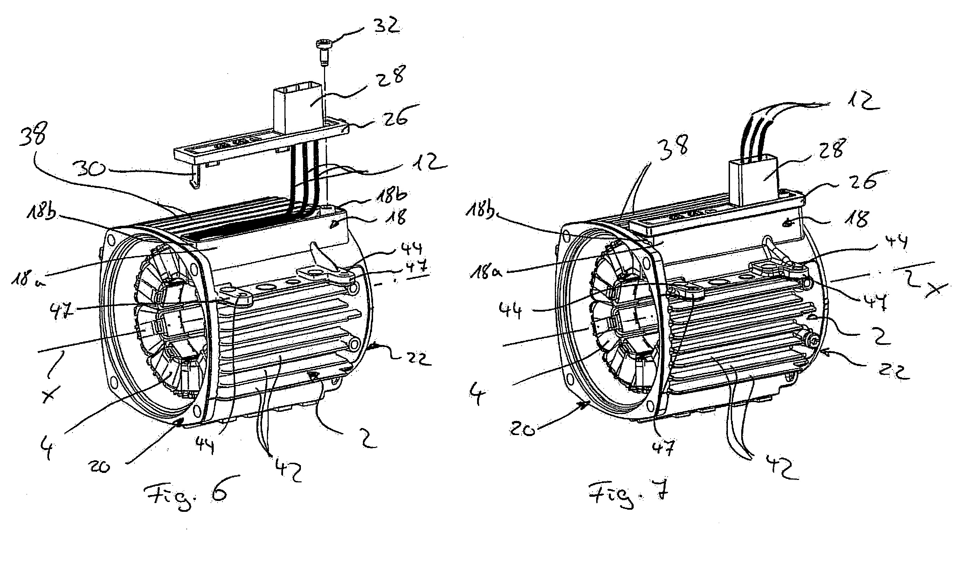

Da das Elektronikgehäuse 8 und das Statorgehäuse 2 zwei getrennte Bauteile darstellen, ist eine elektrische Verbindung zwischen dem Stator 4 im Inneren des Statorgehäuses 2 und den elektronischen Bauteilen, beispielsweise der Leiterplatte 10 im Inneren des Elektronikgehäuses 8 erforderlich. Bei der hier gezeigten erfindungsgemäßen Lösung erfolgt diese Verbindung durch elektrische Anschlussleitungen 12 (siehe Fig. 6 und 7). Um die elektrischen Anschlussleitungen 12 aus dem Inneren des Statorgehäuses 2 nach außen führen zu können, weist das Statorgehäuse 2 an seiner Umfangswandung eine radial gerichtete Öffnung 14 auf, welche eine erste Öffnung 14 bildet, durch welche die elektrischen Anschlussleitungen 12 geführt werden. Das Unterteil 8a des Elektronikgehäuses 8 weist eine zweite Öffnung 16 auf, durch welche sich elektrischen Anschlussleitungen 12 in das Innere des Elektronikgehäuses 8 hinein erstrecken.

Die erste Öffnung 14 in dem Statorgehäuse 2 und die zweite Öffnung 16 in dem Unterteil 8a des Elektronikgehäuses 8 sind in axialer Richtung X, d. h. in Richtung der Drehachse X versetzt bzw. beabstandet angeordnet. Verbunden sind die Öffnungen 14 und 16 dabei durch einen zwischen dem Statorgehäuse 2 und dem Elektronikgehäuse 8 ausgebildeten Anschlusskanal in Form eines Kabelkanals 18. Der Kabelkanal 18 wird durch zwei sich parallel zur Längsachse bzw. Drehachse X erstreckende Seitenwandungen 18a gebildet, welche an ihren Stirnenden in axialer Richtung X gesehen, durch jeweils eine Stirnwand 18b miteinander verbunden sind. Die Seitenwandungen 18a und die Stirnwände 18b bilden somit einen Rahmen, welcher sich von dem Außenumfang des Statorgehäuses 2 zu dem Elektronikgehäuse 8 hin erstreckt. Die Seitenwandungen 18a sind dabei in Form von Rippen ausgebildet, welche sich im Wesentlichen in radialer bzw. tangentialer Richtung vom Außenumfang des Statorgehäuses 2 weg und zu dem Unterteil 8a des Elektronikgehäuses 8 hin erstrecken. Dabei sind die Seitenwandungen 18a und die Stirnwände 18b einstückig mit dem Statorgehäuse 2 aus Metall geformt. Der Kabelkanal 18, welcher so am Außenumfang des Statorgehäuses 2 ausgebildet ist, bildet so eine zum Elektronikgehäuse 8 hin geöffnete Rinne. Die erste Öffnung 14 mündet an einem Axialende in den Kabelkanal 18 hinein. Dies ist dasjenige Axialende, welches der offenen Axialseite 20 des Statorgehäuses zugewandt ist. Dies ist die erste Axialseite 20, an welcher sich die Rotorwelle 6 nach außen erstreckt und durch welche der Stator 4 in das Statorgehäuse 2 eingesetzt wird. An der entgegengesetzten zweiten Axialseite 22 ist an der Außenseite des Statorgehäuses 2 ein mit der Rotorwelle 6 verbundenen Lüfter 24 angeordnet. Die Anordnung der ersten Öffnung 14 möglichst nahe zu der ersten Axialseite 20, durch welche der Stator 4 in das Statorgehäuse 2 eingesetzt wird, hat den Vorteil, dass beim Einsetzen des Stators 4 die elektrischen Anschlussleitungen 12 leicht durch die Öffnung 14 nach außen, d. h. in das Innere des Kabelkanals 18 geführt werden können.

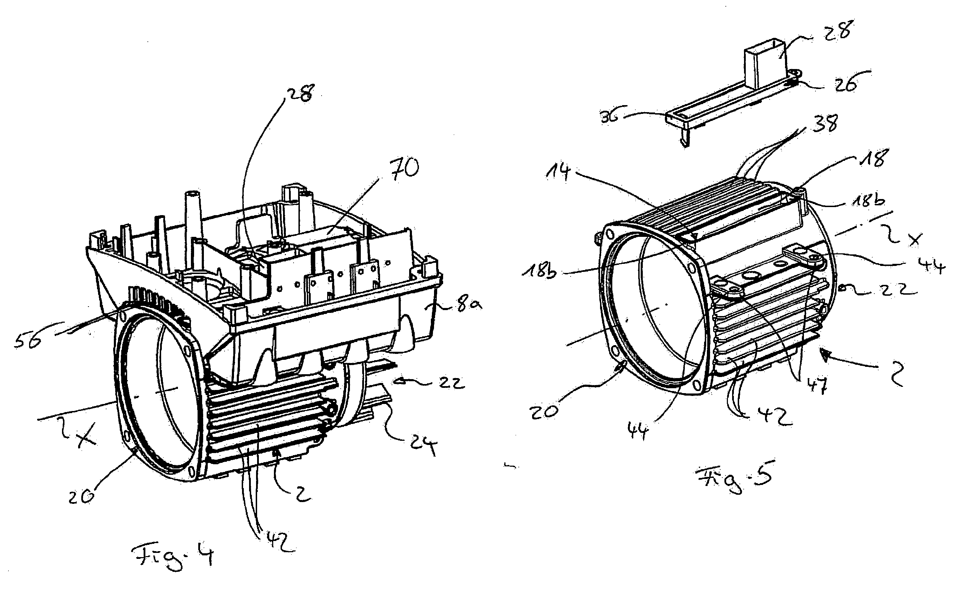

Die zweite Öffnung 16, welche im Unterteil 8a des Elektronikgehäuses 8 in einer dem Statorgehäuse 2 zugewandten Außenwand ausgebildet ist, ist so gelegen, dass sie, wenn das Elektronikgehäuse 8 mit dem Statorgehäuse 2 verbunden ist, ebenfalls dem Kabelkanal 18 gegenüberliegt, jedoch in der Nähe des axialen Endes des Kabelkanals 18, welches der zweiten Axialseite 22 des Statorgehäuses 2 zugewandt ist. Der zum Elektronikgehäuse 8 hin offene Kabelkanal 18 wird nach Einlegen der elektrischen Anschlussleitungen 12 durch einen Deckel 26 verschlossen. Der Deckel 26 weist der zweiten Öffnung 16 gegenüberliegend, d. h. an seinem der zweiten Axialseite 22 des Stators 2 zugewandten Axialende einen Rohrabschnitt 28 auf, welcher zum Inneren des Kabelkanals 18 hin geöffnet ist und sich von dem Kabelkanal 18 weg erstreckt. Der Rohrabschnitt 28 weist hier einen rechteckigen Querschnitt auf, kann jedoch gegebenenfalls auch eine andere Querschnittsform aufweisen. Dabei ist die Querschnittsform des Rohrabschnittes 28 bevorzugt an die Form der zweiten Öffnung 16 angepasst, welche in diesem Ausführungsbeispiel ebenfalls rechteckig ist. Der Rohrabschnitt 28 weist eine äußere Querschnittsform und -größe auf, welche geringfügig kleiner als der Querschnitt der zweiten Öffnung 16 sind. Ferner weist der Rohrabschnitt 28, welcher sich ausgehend von dem Kabelkanal 18 auf die Unterseite des Unterteils 8a des Elektronikgehäuses zu erstreckt, eine solche Länge auf, dass er, wenn das Unterteil 8a des Elektronikgehäuses 8 an dem Statorgehäuse 2 befestigt ist, durch die Öffnung 16 in das Innere des Elektronikgehäuses 8 hineinragt, wie beispielsweise in Fig. 4 zu erkennen ist.

Der Deckel 26 wird an dem Kabelkanal 18 in diesem Ausführungsbeispiel durch ein Rastelement 30 sowie eine Schraube 32 fixiert. Der Deckel 26 liegt an seinem Außenumfang auf der freien Stirnkante der Seitenwandungen 18a und der Stirnwände 18b des Kabelkanals 18 dichtend auf. Gleichzeitig kommt der Deckel 26 mit seiner dem Kabelkanal 18 abgewandten Oberseite bei aufgesetztem Elektronikgehäuse 8 an einer rechteckigen rahmenförmigen Anlagefläche 34 an dem Unterteil 8a dichtend zur Anlage. Die Anlagefläche 34 ist an der dem Statorgehäuse 2 zugewandten Wandung bzw. Unterseite des Unterteils 8a ausgebildet und weist eine Form auf, welche der von den Seitenwandungen 18a und den Stirnwänden 18b des Kabelkanals 18 gebildeten Kontur entspricht. Die Anlagefläche 34 ist vorzugsweise direkt am Unterteil 18a angeformt. Die zweite Öffnung 16 liegt im Inneren dieser rahmenförmigen Anlagefläche 34.

Damit der Deckel 26 gleichzeitig als Dichtung fungieren kann, welche den Kabelkanal 18 zwischen Statorgehäuse 2 und Elektronikgehäuse 8 nach außen hin abdichtet, ist entweder der gesamte Deckel aus einem entsprechend elastischen Material, vorzugsweise einem elastischen Kunststoffmaterial ausgebildet oder weist lediglich an seinem Außenumfang einen elastischen Wulst 36 auf, welcher beispielsweise aus einem Elastomermaterial direkt an den übrigen Teil des Deckels angegossen ist.

Nachdem die Anschlussleitungen 12, wie in Fig. 6 gezeigt, in den Kabelkanal 18 eingelegt sind, wird der Deckel 26 aufgesetzt und mittels des Rastelementes 30 und der Schraube 32 fixiert, wobei die Anschlussleitungen 12 durch den Rohrabschnitt 28 nach außen geführt werden. Anschließend wird das Unterteil 8a des Elektronikgehäuses 8 an dem Statorgehäuse 2 in der weiter unten beschrieben Weise befestigt, wobei die elektrischen Anschlussleitungen 12 durch die Öffnung 16 in das Innere des Elektronikgehäuses 8 geführt werden und der Rohrabschnitt 28 in die Öffnung 16 eingreift und in das Innere des Elektronikgehäuses 8 hineinragt.

Wenn der Kabelkanal 18 mit seinen Seitenwandungen 18a und den Stirnwänden 18b vollständig aus Metall ausgebildet wird und auch an seiner Oberseite durch das metallische Unterteil 8a des Elektronikgehäuses 8 geschlossen wird, sind die Wandungen des Kabelkanals 18 vollständig aus Metall ausgebildet und bilden so eine Abschirmung für die elektrischen Anschlussleitungen 12. Dies ist insbesondere deshalb wichtig, da in dem Elektronikgehäuse 8 ein Frequenzumrichter angeordnet ist, welcher den Motor bzw. den Stator 4 ansteuert. Die Ausgangssignale des Frequenzumrichters, welche über die elektrischen Anschlussleitungen 12 übertragen werden, können elektromagnetische Störsignale erzeugen, welche so durch die metallischen Wandungen des Kabelkanals 18 nach außen abgeschirmt werden.

An der dem Elektronikgehäuse 8 zugewandten Außenseite des Statorgehäuses 2 ist eine Anordnung von Kühlrippen 38 ausgebildet.

Die Seitenwandungen 18a des Kabelkanals 18 erstrecken sich in axialer Richtung parallel zu den Kühlrippen 38. Die Kühlrippen 38 erstrecken sich parallel zur Längs- bzw. Drehachse X und parallel zueinander. D. h. die mittleren Kühlrippen erstrecken sich im Wesentlichen radial zur Längsachse X von der Umfangswandung des Statorgehäuses 2 weg, während sich die äußeren Kühlrippen parallel hierzu ebenfalls im Wesentlichen radial und tangential erstrecken. Die Kühlrippen 38 erstrecken sich ausgehend von dem Statorgehäuse 2 zu dem Elektronikgehäuse 8 hin. Das Elektronikgehäuse 8 ist von der Außenseite des Statorgehäuses 2 so angeordnet, dass ein Freiraum zwischen Statorgehäuse 2 und Elektronikgehäuse 8 verbleibt, in welchem die Kühlrippen 38 an dem Statorgehäuse 2 sowie gegenüberliegende Kühlrippen 56 gelegen sind, welche an der dem Statorgehäuse 2 zugewandten Wandung des Unterteils 8a des Elektronikgehäuses 8 ausgebildet sind. Der Kabelkanal 18 ist an einer Seite der Anordnung von Kühlrippen 38 gelegen. Die Kühlrippen 38 sind wie die Seitenwandungen 18a des Kabelkanals 18 einstückig mit dem Statorgehäuse 2 aus Metall ausgebildet. Dadurch, dass der Kabelkanal 18 an der Seite der Anordnung von Kühlrippen 38 gelegen ist und sich im Übrigen parallel zu den Kühlrippen 38 erstreckt, beeinträchtigt der Kabelkanal 18 den Kühlluftstrom durch die Anordnung von Kühlrippen 38 im wesentlichen nicht. Vielmehr haben auch die Seitenwandungen 18a des Kabelkanals 18 die Wirkung von Kühlrippen und unterstützen so die Kühlung des Statorgehäuses 2 an der dem Klemmenkasten bzw. Elektronikgehäuse 8 zugewandten Seite. An den übrigen Umfangs- bzw. Seitenflächen des Statorgehäuses 2 sind weitere Kühlrippen 42 in bekannter Weise angeordnet.

Die Befestigung des Elektronikgehäuses 8 am Statorgehäuse 2 erfolgt durch Schrauben, welche durch Befestigungsausnehmungen 44 hindurch von unten in das Unterteil des Elektronikgehäuses 8 eingreifen. Dazu sind an dem Unterteil des Elektronikgehäuses Gewindelöcher 46 ausgebildet. Die Befestigungsausnehmungen bzw. Befestigungslöcher 44 sind in sich seitlich von dem Statorgehäuse 2 wegerstreckenden Laschen 47 ausgebildet. So sind die Befestigungspunkte, an welchen das Elektronikgehäuse 8 mit dem Statorgehäuse 2 verbunden ist, seitlich und außerhalb der Anordnung von Kühlrippen 38 gelegen. So wird der Kühlluftstrom zwischen dem Elektronikgehäuse 8 und dem Statorgehäuse 2 durch diese Befestigungselemente nicht beeinträchtigt, da die Schrauben, welche sich durch die Befestigungsausnehmungen 44 hindurch in die Gewindelöcher 36 erstrecken, außerhalb dieses Kühlluftstroms gelegen sind.

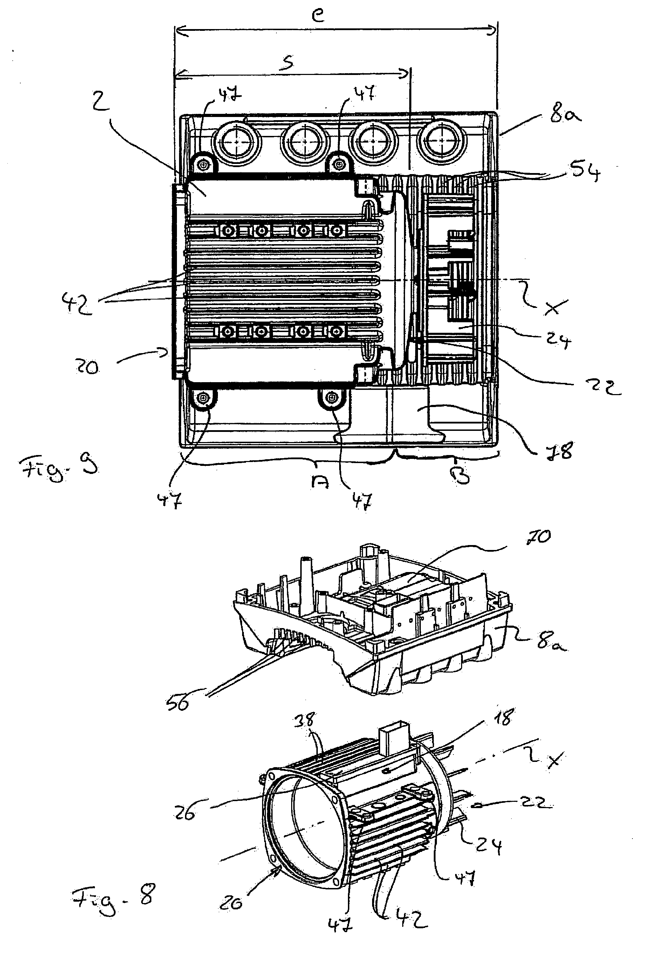

Wie in Fig. 9 besonders gut zu erkennen ist, weist das Statorgehäuse 2 eine axiale Länge s auf, welche kleiner ist als die axiale Länge e des Elektronikgehäuses 8. Das Elektronikgehäuse 8 überragt somit die Axialseite 22 des Statorgehäuses 2 in axialer Richtung. Das Elektronikgehäuse 8 weist somit zwei Abschnitt A und B auf, wobei ein erster Abschnitt A des Elektronikgehäuses 8 radialseitig des Statorgehäuses 2 gelegen ist. Der Abschnitt B ist derjenige Abschnitt des Elektronikgehäuses, welcher das Statorgehäuse 2 in axialer Richtung überragt. Der Abschnitt B ist dabei radialseitig des Lüfters 24 gelegen, welcher axialseitig der zweiten Axialseite 22 des Statorgehäuses 2 gelegen ist.

Der Lüfter 24 ist von einer Abdeckung in Form einer Abdeckkappe 48 umgeben. Die Abdeckkappe 48 schließt an die Außenumfangsfläche des Statorgehäuses 2 an und ist an ihrer Umfangsseite geschlossen ausgebildet. Lediglich an der dem Elektronikgehäuse 8 zugewandten Umfangsseite ist eine Aussparung 50 ausgebildet. An der Axialseite der Abdeckkappe 48, welche dem Statorgehäuse 2 abgewandt sind, sind Lufteintrittsöffnungen 52 ausgebildet. Der Lüfter 24, welcher von der Rotorwelle 6 angetrieben wird, saugt Luft durch die Lufteintrittsöffnungen 52 in axialer Richtung an und drückt diese Luft in radialer Richtung in den Umfangsbereich des Lüfters 24, radial gegen die Innenseite der Kappe 48. Dabei wird die Luft so umgelenkt, dass sie in die Freiräume zwischen den Kühlrippen 42 geleitet wird und so axialseitig im Umfangsbereich des Statorgehäuses 2 austritt und entlang der Kühlrippen 42 strömt.

Im Bereich des Aussparung 50 tritt die Luft aus dem Lüfter 24 in radialer Richtung gegen die Unterseite des Unterteils 8a des Elektronikgehäuses 8 aus. Das ist die Unterseite des Abschnittes B des Elektronikgehäuses 8. Die Unterseite bildet einen ersten Wandungsabschnitt, an welchem Kühlrippen 54 ausgebildet sind, welche sich bezogen auf die Drehachse X in tangentialer Richtung bzw. Umfangsrichtung erstrecken. Ein radial austretender Kühlluftstrom sowie auch mögliche tangentiale Kühlluftstromkomponenten, welche aus dem Lüfter 24 austreten, strömen so in diesem Bereich zunächst in Umfangsrichtung entlang der Kühlrippen 54. In diesem Bereich tritt die Kühlluft darüber hinaus in den Spalt zwischen Elektronikgehäuse 8 und Statorgehäuse 2 ein, in welchem die Kühlrippen 38 an der dem Elektronikgehäuse 8 zugewandten Außenseite des Statorgehäuses 2 gelegen sind. Dieser Spalt ist somit zwischen dem ersten Abschnitt A und des Elektronikgehäuses 8 und dem Statorgehäuse 2 gelegen. In diesem Abschnitt A sind an der Unterseite des Unterteils 8a des Elektronikgehäuses 8, welcher einen zweiten Wandungsabschnitt bildet, Kühlrippen 56 ausgebildet, welche sich in axialer Richtung parallel zur Drehachse X erstrecken. Die Kühlrippen 56 erstrecken sich ausgehend von der Unterseite des Unterteils 8a des Elektronikgehäuses 8 in Richtung des Statorgehäuses 2. Dabei sind die Kühlrippen 56 den Kühlrippen 38 an der Seite des Statorgehäuses 2 entgegengesetzt und vorzugsweise gegenüberliegend angeordnet. Der Kühlluftstrom strömt somit in diesem Bereich der Kühlrippen 38 und der Kühlrippen 56 axial durch den Freiraum zwischen dem ersten Abschnitt A des Elektronikgehäuses 8 und dem Statorgehäuse 2 hindurch und tritt aus diesem Spalt an der ersten Axialseite 20 des Statorgehäuses 2 aus.

Die Kühlrippen 54 und 56 an der dem Statorgehäuse 2 zugewandten Unter- bzw. Außenseite des Elektronikgehäuses 8 dienen der Kühlung des Elektronikgehäuses und damit der im Inneren des Elektronikgehäuses angeordneten elektronischen Bauteile. Dabei sind die elektronischen Bauteile, welche die meiste Abwärme erzeugen, an der Innenseite des Unterteils 8a des Elektronikgehäuses 8 in dem zweiten Abschnitt B gelegen, welcher radialseitig des Lüfters 24 gelegen ist und an seiner Außenseite mit den Kühlrippen 54 versehen ist, welche sich in Umfangsrichtung bzw. tangentialer Richtung erstrecken. Die elektronischen Bauteile, welche die meiste Abwärme erzeugen, sind ein Wechselrichter 58 sowie ein Gleichrichter 60 eines Frequenzumrichters, welcher in dem Elektronikgehäuse 8 angeordnet sind. Der Wechselrichter 58 enthält die Leistungsschalter des Frequenzumformers und ist dasjenige Bauteil, welches gemeinsam mit dem Gleichrichter 60 die meiste Abwärme erzeugt. Der Wechselrichter 58 und der Gleichrichter 60 liegen an Anlageflächen 70 an der Innenseite des metallischen Unterteils 8a des Elektronikgehäuses 8 wärmeleitend an. Dazu kann zwischen der Anlagefläche 70 und dem Wechselrichter 58 sowie dem Gleichrichter 60 zusätzliche wärmeleitende Verbindung, beispielsweise durch wärmeleitende Klebstoffe oder sonstige wärmeleitende Stoffe geschaffen sein.

Dasjenige elektronische Bauteil, was die zweitmeiste Abwärme im Inneren des Elektronikgehäuses 8 erzeugt, ist in diesem Ausführungsbeispiel eine Spule 72, welche als Entstörspule (CMC, Common Mode Choke) dient. Dieses Bauteil ist im ersten Abschnitt A über den Kühlrippen 56 an der Innenseite des Unterteiles 8a des Elektronikgehäuses angeordnet. Auch die Spule 72 befindet sich in wärmeleitender Verbindung mit der Innenfläche der Unterseite des Unterteils 8a des Elektronikgehäuses 8. Dadurch, dass der Wechselrichter 58 und der Gleichrichter 60 in dem zweiten Abschnitt B über dem in Umfangsrichtung gerichteten Kühlrippen 54 gelegen sind, werden diese durch den in radialer Richtung gerichteten und durch die Kühlrippen 54 in Umfangsrichtung umgelenkten Kühlluftstrom, welcher direkt aus dem Lüfter 24 austritt am stärksten gekühlt. Die im weiteren Strömungsverlauf dann durch die Kühlrippen 56 strömende Lüft kühlt dann den Bereich, in dem dasjenige elektronische Bauteil gelegen ist, was die zweitmeiste Abwärme erzeugt, nämlich die Spule 72, sodass auch diese optimiert gekühlt wird.

Zwischen dem Bereich des Elektronikgehäuses 8, in welchem die Spule 72 gelegen ist und dem übrigen Innenraum des Unterteils des Elektronikgehäuses 8 ist eine metallische Trennwand 74 gelegen, welche der elektromagnetischen Abschirmung dient.

Ein weiteres elektronisches Bauteil, welches Abwärme erzeugt, nämlich die Spule 76 ist in einer seitlichen Tasche 78 gelegen, welche in dem Unterteil 8a des Elektronikgehäuses 8 ausgebildet ist. Dies Spule 76 ist eine Spule zur Blindstrom-Kompensation (Power factor correction coil). Auch dieses Bauteil erzeugt Abwärme. Um dieses Bauteil optimal kühlen zu können, ist die Tasche 78 an der Außenseite des Elektronikgehäuses 8 in dem Bereich des Elektronikgehäuses 8 gebildet, welcher das Statorgehäuse 2 in radialer Richtung überragt. Wie in Fig. 9 zu erkennen ist, liegt die Tasche 78 stirnseitig der Kühlrippen 54 im Bereich des Abschnitts B oder direkt angrenzend an den Abschnitt B des Elektronikgehäuses 8. Durch die umfänglich bzw. tangential zur Drehachse X gerichteten Kühlrippen 54 wird ein tangential gerichteter Kühlluftstrom in diesem Bereich erzeugt, welcher so direkt die Außenwandung der Tasche 78 anströmt, sodass auch dieser Bereich besonders bevorzugt gekühlt wird. Die Tasche 78 ist an die Außenform der Spule 76 angepasst ist, sodass in diesem Bereich ein möglichst großflächiger Wärmeübergang von der Spule 76 auf die Wandung der Tasche 78 und damit die Außenwandung des Elektronikgehäuses 8 bzw. des Unterteils 8a des Elektronikgehäuses 8 erreicht wird.

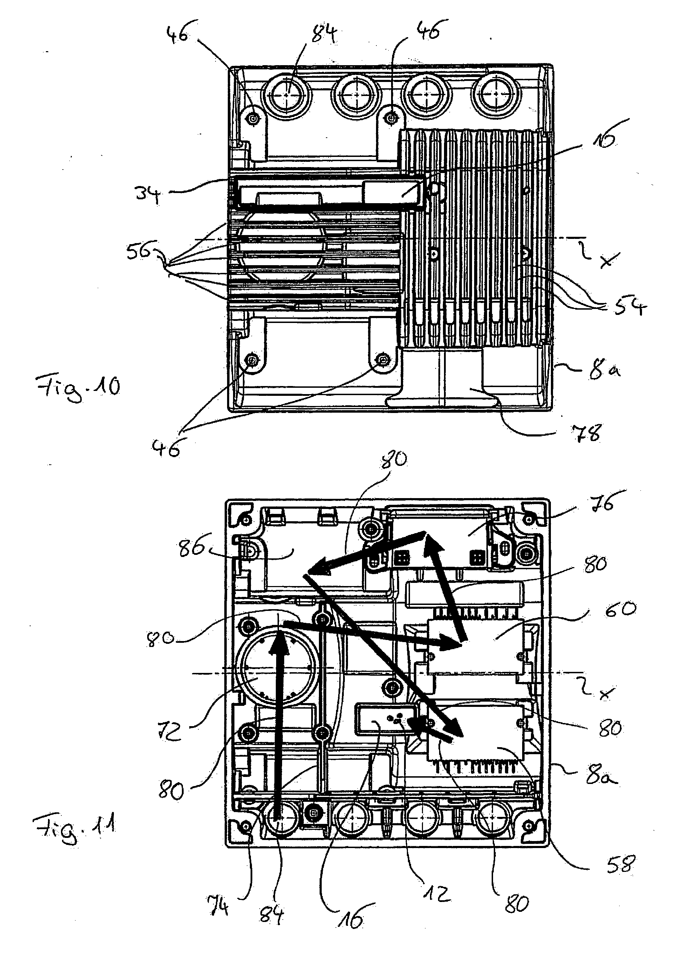

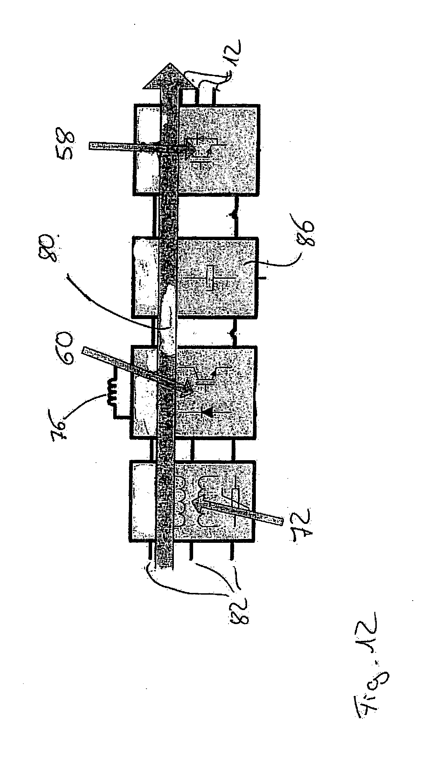

Anhand von Fig. 11 und Fig. 12 wird noch einmal erläutert, wie die wesentlichen elektronischen Bauteile des Frequenzumrichters, welche in dem Unterteil 8a des Elektronikgehäuses 8 angeordnet sind, zusammenwirken. In Fig. 11 und Fig. 12 wird der Leistungsfluss zwischen den einzelnen Bauteilen durch Pfeile 80 gekennzeichnet. Die elektrische Leistung tritt durch eine Netzanschlussleitung 82, welche durch die Kabeldurchführung 84 in das Innere des Elektronikgehäuses 8 geführt ist, in die elektrische Schaltung des Frequenzumrichters ein. Im Leistungsfluss 80 ist das erste wesentliche Bauteil die Spule 72. Von dort geht der Leistungsfluss 80 in den Gleichrichter 60 und die zugehörige Spule 76, welche der Blindstrom-Kompensation dient. Im Leistungsfluss 80 das nächste Wesentliche Bauteil ist ein Kondensator 86, welcher in dem Seitenteil des Elektronikgehäuses 8 gelegen ist, in welchem auch die Spule 76 angeordnet ist. Der Kondensator 86 liegt in axialer Richtung gesehen neben der Spule 76. Von dort geht der Leistungsfluss zu dem Wechselrichter 58 und von dort in die elektrischen Anschlussleitungen 12, welche durch die Öffnung 16 zu dem Stator 2 führen.

Durch die vorangehend beschrieben Ausgestaltung des Unterteils 8a des Elektronikgehäuses 8 wird ein optimales Wärmemanagement für die wärmeerzeugenden Bauteile im Inneren des Elektronikgehäuses 8 erzeugt. Besondere Bedeutung kommt dabei der gewinkelten Ausrichtung der Kühlrippen 56 und 54 an der dem Statorgehäuse 2 zugewandten Unterseite des Unterteils 8a des Elektronikgehäuses 8 zu. Die Wandungsabschnitt, an denen die Kühlrippen 54 und 56 ausgebildet sind, schließen dabei in axialer Richtung aneinander an und sind einstückig ausgebildet. So können alle wärmeleitenden Bauteil sehr einfach einstückig mit dem gesamten Unterteil 8a als Gussbauteil ausgebildet werden. In dem hier gezeigten Beispiel sind die Kühlrippen 54 und 56 einstückig mit dem Unterteil 8a des Elektronikgehäuses 8 ausgebildet. Anstelle dieser Ausgestaltung könnte das Unterteil 8a des Elektronikgehäuses auch im Bereich der Kühlrippen 54 und/oder im Bereich der Kühlrippen 56 jeweils eine Ausnehmung aufweisen, in welche ein Wärmeverteiler eingesetzt ist, an welchem die Kühlrippen 54 und/oder 56 ausgebildet sind. Ein solcher Wärmeverteiler könnte dann im Inneren des Elektronikgehäuses 8 im Bereich der Kühlrippen 56 mit der Spule 72 oder im Bereich der Kühlrippen 54 mit im Wechselrichter 58 und/oder dem Gleichrichter 60 wärmeleitend verbunden sein. Dabei könnte ein solcher in einer Ausnehmung eingesetzter Wärmeverteiler nur für den Bereich der Kühlrippen 54 zusätzlich oder alternativ aber auch für den Bereich der Kühlrippen 56 ausgebildet sein. Sollten sowohl die Kühlrippen 54 als auch die Kühlrippen 56 an einem Wärmeverteiler angeordnet sein, könnten hierfür mehrere separate Wärmeverteiler oder auch ein gemeinsamer Wärmeverteiler Verwendung finden. Ein solcher Wärmeverteiler könnte aus Metall ausgebildet werden und insbesondere dann Verwendung finden, wenn das Unterteil 8a des Elektronikgehäuses 8 aus Kunststoff ausgebildet wird.

### Bezugszeichenliste

- 2: Statorgehäuse
- 4: Stator
- 6: Rotorwelle
- 8: Elektronikgehäuse
- 8a: Unterteile
- 8b: Deckel
- 10: Leiterplatte
- 12: elektrische Anschlussleitungen
- 14: Öffnung
- 16: Öffnung
- 18: Kabelkanal
- 18a: Seitenwandungen des Kabelkanals
- 18b: Stirnwände des Kabelkanals
- 20, 22: Axialseiten des Statorgehäuses 2
- 24: Lüfter
- 26: Deckel
- 28: Rohrabschnitt
- 30: Rastelement
- 32: Schraube
- 34: Anlagefläche
- 36: Wulst
- 38, 42: Kühlrippen
- 44: Befestigungsausnehmungen
- 46: Gewindelöcher
- 47: Laschen
- 48: Abdeckkappe
- 50: Aussparung
- 52: Lufteintrittsöffnungen
- 54, 56: Kühlrippen
- 58: Wechselrichter
- 60: Gleichrichter
- 70: Anlagefläche
- 72: Spule
- 74: Trennwand
- 76: Spule
- 78: Tasche
- 80: Leistungsfluss
- 82: Netzanschlussleitung
- 84: Kabeldurchführung
- 86: Kondensator

- X: Dreh- bzw. Längsachse
- A, B: Abschnitte des Elektronikgehäuses 8
- s: axiale Länge des Statorgehäuses
- e: axiale Länge des Elektronikgehäuses

## Patentansprüche

1. Elektromotor mit einem Statorgehäuse (2) und einem Elektronikgehäuse (8), wobei ein erster Abschnitt (A) des Elektronikgehäuses radialseitig des Statorgehäuses (2) angeordnet ist und an einem Axialende (22) des Statorgehäuses (2) ein Lüfter (24) angeordnet ist, wobei
das Elektronikgehäuse (8) sich in axialer Richtung (X) über das Axialende (22) des Statorgehäuses, an welchem der Lüfter angeordnet ist, derart hinaus erstreckt, dass ein zweiter Abschnitt (B) des Elektronikgehäuses (8), in dessen Inneren zumindest ein erstes wärmeerzeugendes elektronisches Bauteil (58, 60) angeordnet ist, radialseitig des Lüfters (24) gelegen ist, **dadurch gekennzeichnet, dass** im Inneren des zweiten Abschnittes (B) des Elektronikgehäuses (8) das zumindest eine erste wärmeerzeugende Bauteil (58, 60) an einer Innenseite des dem Lüfter (24) zugewandten ersten Wandungsabschnittes angeordnet ist und das zumindest eine erste wärmeerzeugende elektronische Bauteil (58, 60) dasjenige Bauteil im Inneren des Elektronikgehäuses (8) ist, welches die meiste Wärme erzeugt.

2. Elektromotor nach Anspruch 1, **dadurch gekennzeichnet, dass** der zweite Abschnitt (B) des Elektronikgehäuses (8) an seiner Außenseite in tangentialer Richtung durch einen von dem Lüfter (24) erzeugten Kühlluftstrom überströmt wird.

3. Elektromotor nach Anspruch 2, **dadurch gekennzeichnet, dass** ein erster Teilluftstrom des von dem Lüfter (24) erzeugten Kühlluftstromes eine Außenseite des zweiten Abschnittes (B) des Elektronikgehäuses (8) überströmt und ein zweiter Teilluftstrom eine Außenseite des ersten Abschnittes (A) des Elektronikgehäuses (8) überströmt.

4. Elektromotor nach einem der vorangehenden Ansprüche, **dadurch gekennzeichnet, dass** an dem zweiten Abschnitt (B) des Elektronikgehäuses (8), welcher radialseitig des Lüfters (24) angeordnet ist, an der Außenseite eines dem Lüfter (24) zugewandten ersten Wandungsabschnittes eine zu dem Lüfter (24) hin gerichtete Berippung (54) ausgebildet ist.

5. Elektromotor nach einem der vorangehenden Ansprüche, **dadurch gekennzeichnet, dass** an dem zweiten Abschnitt (B) des Elektronikgehäuses (8), welcher radialseitig des Lüfters (24) angeordnet ist, an der Außenseite eines dem Lüfter (24) zugewandten ersten Wandungsabschnittes Kühlrippen (54) ausgebildet sind, welche sich bezogen auf die Drehachse (X) des Elektromotors in Umfangsrichtung erstrecken.

6. Elektromotor nach einem der vorangehenden Ansprüche, **dadurch gekennzeichnet, dass** der erste Abschnitt (A) des Elektronikgehäuses (8) an der Außenseite eines der Umfangsfläche des Statorgehäuses (2) zugewandten zweiten Wandungsabschnittes Kühlrippen (56) aufweist, welche sich parallel zur Drehachse (X) des Elektromotors erstrecken.

7. Elektromotor nach einem der vorangehenden Ansprüche, **dadurch gekennzeichnet, dass** es sich bei dem zumindest einen ersten wärmeerzeugenden elektronischen Bauteil um einen Gleich- (60) und/oder Wechselrichter (58) eines Frequenzumrichters handelt.

8. Elektromotor nach einem der vorangehenden Ansprüche, **dadurch gekennzeichnet, dass** in dem ersten Abschnitt (A) des Elektronikgehäuses (8) zumindest ein zweites wärmeerzeugendes elektronisches Bauteil (72) an einer Innenseite des zweiten, dem Statorgehäuse (2) zugewandten Wandungsabschnittes angeordnet ist.

9. Elektromotor nach einem der vorangehenden Ansprüche, **dadurch gekennzeichnet, dass** in dem zweiten Abschnitt (B) des Elektronikgehäuses (8) eine Tasche (78) ausgeformt ist, in deren Inneren ein wärmeerzeugendes elektronisches Bauteil (76) angeordnet ist, und welche derart angeordnet ist, dass die Tasche (78) an ihrer Außenseite von einem tangential gerichteten Kühlluftstrom angeströmt wird.

10. Elektromotor nach einem der vorangehenden Ansprüche, **dadurch gekennzeichnet, dass** zumindest der erste, dem Lüfter (24) zugewandte Wandungsabschnitt und/oder der zweite dem Statorgehäuse (2) zugewandte Wandungsabschnitt des Elektronikgehäuses (8) aus Metall gefertigt sind.

11. Elektromotor nach einem der vorangehenden Ansprüche, **dadurch gekennzeichnet, dass** der erste, dem Lüfter (24) zugewandte Wandungsabschnitt und der zweite dem Statorgehäuse (2) zugewandte Wandungsabschnitt des Elektronikgehäuses (8) einstückig gefertigt sind.

12. Elektromotor nach einem der vorangehenden Ansprüche, **dadurch gekennzeichnet, dass** im Inneren des Elektronikgehäuses (8) zwischen zwei Bereichen des Innenraumes eine elektromagnetische Abschirmung (74) angeordnet ist.

13. Elektromotor nach einem der vorangehenden Ansprüche, **dadurch gekennzeichnet, dass** mechanische (46, 47) und/oder elektrische Verbindungselemente (18) zwischen dem Statorgehäuse und dem Elektronikgehäuse (8) derart angeordnet sind, dass sie seitlich eines Kühlluftstromes zwischen Stator- (2) und Elektronikgehäuse (8) gelegen sind.

14. Pumpenaggregat mit einem Antriebsmotor, **dadurch gekennzeichnet, dass** der Antriebsmotor ein Elektromotor nach einem der vorangehenden Ansprüche ist.

## Claims

1. An electric motor with a stator housing (2) and with an electronics housing (8), wherein a first section (A) of the electronics housing is arranged on the radial side of the stator housing (2), and a fan (24) is arranged on an axial end (22) of the stator housing (2), wherein the electronics housing (8) extends in the axial direction (X) beyond the axial end (22) of the stator housing, on which axial end the fan is arranged, in a manner such that a second section (B) of the electronics housing (8), in whose inside at least one first heat-producing electronic component (58, 60) is arranged, is situated on the radial side of the fan (24), **characterised in that** the at least one first heat-producing component (58, 60) is arranged on an inner side of the first wall section facing the fan (24), in the inside of the second section (B) of the electronics housing (8), and the at least one first heat-producing electronic component (58, 60) is that component in the inside of the electronics housing (8), which produces most heat.

2. An electric motor according to claim 1, **characterised in that** a cooling airflow produced by the fan (24) flows over the second section (B) of the electronics housing (8) on its outer side, in the tangential direction.

3. An electric motor according to claim 2, **characterised in that** a first part airflow of the cooling airflow produced by the fan (24) flows over an outer side of the second section (B) of the electronics housing (8), and a second part airflow flows over an outer side of the first section (A) of the electronics housing (8).

4. An electric motor according to one of the preceding claims, **characterised in that** a ribbing (54) directed towards the fan (24) is formed on the outer side of a first wall section facing the fan (24), on the second section (B) of the electronics housing (8) which is arranged on the radial side of the fan (24).

5. An electric motor according to one of the preceding claims, **characterised in that** cooling ribs (54) which extend in the peripheral direction with respect to the rotation axis (X) of the electric motor, are formed on the outer side of a first wall section facing the fan (24), on the second section (B) of the electronics housing (8) which is arranged on the radial side of the fan (24),

6. An electric motor according to one of the preceding claims, **characterised in that** the first section (A) of the electronics housing (8) on the outer side of a second wall section facing the peripheral surface of the stator housing (2) comprises cooling ribs (56) which extend parallel to the rotation axis (X) of the electric motor.

7. An electric motor according to one of the preceding claims, **characterised in that** with regard to the at least one first heat-producing electronic component, it is the case of a rectifier (60) and/or inverter (58) of a frequency converter.

8. An electric motor according to one of the preceding claims, **characterised in that** at least one second heat-producing electronic component (72) is arranged on an inner side of the second wall section facing the stator housing (2), in the first section (A) of the electronics housing (8)

9. An electric motor according to one of the preceding claims, **characterised in that** a pocket (78) is recessed in the second section (B) of the electronics housing (8), in the inside of which pocket a heat-producing electronic component (76) is arranged, and is arranged in a manner such that a tangentially directed cooling airflow flows onto the pocket (78) on its outer side.

10. An electric motor according to one of the preceding claims, **characterised in that** at least the first wall section of the electronics housing (8) which faces the fan (24) and/or the second wall section of the electronics housing (8) which faces the stator housing (2), are manufactured of metal.

11. An electric motor according to one of the preceding claims, **characterised in that** the first wall section of the electronics housing (8) which faces the fan (24) and the second wall section of the electronics housing (8) which faces the stator housing (2) are manufactured of one piece.

12. An electric motor according to one of the preceding claims, **characterised in that** an electromagnetic shielding (74) is arranged in the inside of the electronics housing (8) between two regions of the interior.

13. An electric motor according to one of the preceding claims, **characterised in that** mechanical (46, 47) and/or electronic connection elements (18) are arranged between the stator housing and the electronics housing (8) in a manner such that they are situated laterally of a cooling airflow between the stator housing (2) and the electronics housing (8).

14. A pump assembly with a drive motor, **characterised in that** the drive motor is an electric motor according to one of the preceding claims.

## Revendications

1. Moteur électrique comprenant un carter de stator (2) et un boîtier d'électronique (8), dans lequel un premier segment (A) du boîtier d'électronique est disposé radialement à côté du carter de stator (2) et un ventilateur (24) est disposé à une extrémité axiale (22) du carter de stator (2), et dans lequel le boîtier d'électronique (8) se prolonge dans la direction axiale (X) au-delà de l'extrémité axiale (22) du carter de stator au niveau de laquelle le ventilateur est disposé, de telle sorte qu'un second segment (B) du boîtier d'électronique (8), à l'intérieur duquel est disposé au moins un premier composant électronique générant de la chaleur (58, 60), est placé radialement à côté du ventilateur (24), **caractérisé en ce que** le premier composant générant de la chaleur (58, 60), au moins au nombre de un, est disposé à l'intérieur du second segment (B) du boîtier d'électronique (8), le long de la face interne du premier segment de paroi qui est dirigé vers le ventilateur (24), et **en ce que** le premier composant électronique générant de la chaleur (58, 60), au moins au nombre de un, est le composant situé à l'intérieur du boîtier d'électronique (8) qui génère le plus de chaleur.

2. Moteur électrique selon la revendication 1, **caractérisé en ce que** le second segment (B) du boîtier d'électronique (8) est léché sur sa face externe, dans une direction tangentielle, par un courant d'air de refroidissement généré par le ventilateur (24).

3. Moteur électrique selon la revendication 2, **caractérisé en ce qu'**un premier courant partiel du courant d'air de refroidissement généré par le ventilateur (24) lèche une face externe du second segment (B) du boîtier d'électronique (8) et qu'un second courant partiel lèche une face externe du premier segment (A) du boîtier d'électronique (8).

4. Moteur électrique selon l'une des revendications précédentes, **caractérisé en ce que**, sur le second segment (B) du boîtier d'électronique (8), qui est disposé radialement à côté du ventilateur (24), est formé, sur la face externe d'un premier segment de paroi dirigé vers le ventilateur (24), un nervurage (54) orienté vers le ventilateur (24).

5. Moteur électrique selon l'une des revendications précédentes, **caractérisé en ce que**, sur le second segment (B) du boîtier d'électronique (8) qui est disposé radialement à côté du ventilateur (24), sont formées, sur la face externe d'un premier segment de paroi dirigé vers le ventilateur (24), des nervures de refroidissement (54) qui s'étendent dans la direction circonférentielle par rapport à l'axe de rotation (X) du moteur électrique.

6. Moteur électrique selon l'une des revendications précédentes, **caractérisé en ce que** le premier segment (A) du boîtier d'électronique (8) présente, sur la face externe d'un second segment de paroi dirigé vers la surface circonférentielle du carter de stator (2), des nervures de refroidissement (56) qui s'étendent parallèlement à l'axe de rotation (X) du moteur électrique.

7. Moteur électrique selon l'une des revendications précédentes, **caractérisé en ce que** le premier composant électronique générant de la chaleur, au moins au nombre de un, est un redresseur (60) et/ou un onduleur (58) d'un convertisseur de fréquence.

8. Moteur électrique selon l'une des revendications précédentes, **caractérisé en ce que**, dans le premier segment (A) du boîtier d'électronique (8) est disposé au moins un second composant électronique générant de la chaleur (72), le long de la face interne du second segment de paroi qui est dirigé vers le carter de stator (2).

9. Moteur électrique selon l'une des revendications précédentes, **caractérisé en ce que**, dans le second segment (B) du boîtier d'électronique (8) est formée une poche (78) à l'intérieur de laquelle est disposé un composant électronique générant de la chaleur (76), et qui est disposée de telle sorte que la poche (78) est léchée sur sa face externe par un courant d'air de refroidissement orienté tangentiellement.

10. Moteur électrique selon l'une des revendications précédentes, **caractérisé en ce qu'**au moins le premier segment de paroi, dirigé vers le ventilateur (24), et/ou le second segment de paroi, dirigé vers le carter de stator (2), du boîtier d'électronique (8) est ou sont fabriqué(s) en métal.

11. Moteur électrique selon l'une des revendications précédentes, **caractérisé en ce que** le premier segment de paroi, dirigé vers le ventilateur (24), et le second segment de paroi, dirigé vers le carter de stator (2), du boîtier d'électronique (8) sont fabriqués en une seule pièce.

12. Moteur électrique selon l'une des revendications précédentes, **caractérisé en ce qu'**un blindage électromagnétique (74) est disposé à l'intérieur du boîtier d'électronique (8), entre deux régions de son espace intérieur.

13. Moteur électrique selon l'une des revendications précédentes, **caractérisé en ce que** des éléments de liaison mécaniques (46, 47) et/ou électriques (18) sont disposés entre le carter de stator et le boîtier d'électronique (8) de telle sorte qu'ils sont placés latéralement à un courant d'air de refroidissement circulant entre le carter de stator (2) et le boîtier d'électronique (8).

14. Groupe motopompe comprenant un moteur de commande, **caractérisé en ce que** le moteur de commande est un moteur électrique selon l'une des revendications précédentes.
